# EUROPÄISCHE PATENTSCHRIFT

(11) **EP 2 300 696 B1**
(45) Veröffentlichungstag und Bekanntmachung des Hinweises auf die Patenterteilung: **28.12.2011**
(21) Anmeldenummer: 10737512.3
(22) Anmeldetag: 22.07.2010
(51) Int. Cl.: F01M 1/02, F01M 5/00, F16N 39/02, F16H 57/04

(54) **GETRIEBEÖLKREISLAUF**
TRANSMISSION OIL CIRCUIT
CIRCUIT D'HUILE DE TRANSMISSION

(30) Priorität: 28.07.2009 DE 102009035082
(43) Veröffentlichungstag der Anmeldung: 30.03.2011
(73) Patentinhaber: Voith Patent GmbH, 89522 Heidenheim (DE)
(72) Erfinder: HÖFIG, Bernhard, 89518 Heidenheim (DE); WURSTER, Christoph, 89173 Lonsee (DE); GERLICH, Michael, 89520 Heidenheim (DE); REIK, Michael, 89073 Ulm (DE)
(74) Vertreter: Dr. Weitzel & Partner
(86) Internationale Anmeldenummer: PCT/EP2010/004489
(87) Internationale Veröffentlichungsnummer: WO 2011/012259

(56) Entgegenhaltungen:
- JP-A- 2004 245 318
- JP-A- 2008 267 444
- US-A- 3 858 459
- US-A1- 2004 204 281

## Beschreibung

Die vorliegende Erfindung betrifft einen Getriebeölkreislauf und ein Verfahren zum Steuern des Ölflusses in einem solchen Kreislauf, im Einzelnen mit den Merkmalen gemäß dem Oberbegriff von Anspruch 1 und dem Oberbegriff von Anspruch 6.

Getriebe, insbesondere Fahrzeuggetriebe, weisen einen Getriebeölkreislauf auf, der zum einen zum Schmieren von Getriebebauteilen und zum anderen zur Druckbetätigung oder Druckölbeaufschlagung von Getriebekomponenten dient. Auch kann das Öl des Getriebeölkreislaufes als Arbeitsmedium einer hydrodynamischen Maschine herangezogen werden, die im Getriebe, am Getriebe oder außerhalb des Getriebes vorgesehen ist und beispielsweise als hydrodynamischer Wandler, hydrodynamische Kupplung oder hydrodynamischer Retarder ausgeführt ist. Getriebekomponenten sind insbesondere Kupplungen, insbesondere Lamellenpaketkupplungen, Klauen- oder andere Kupplungseinrichtungen, um verschiedene Drehzahlen und Drehmomente zum Ausbilden verschiedener Gangstufen in dem Getriebe zwischen einer Getriebeeingangswelle und einer Getriebeausgangswelle einzustellen.

Es ist üblich, dass in einem solchen Getriebeölkreislauf mittels einer Ölpumpe Öl aus einem Ölsumpf gefördert wird, um das Öl für die genannten Aufgaben zur Verfügung zu stellen. In der Regel fördert die Ölpumpe, die beispielsweise als Zahnradpumpe ausgebildet sein kann, gegen ein Arbeitsdruckventil, auch Hauptdruckventil genannt, das sicherstellt, dass für die verschiedenen Komponenten ein ausreichender Öldruck vorhanden ist. Dieser Öldruck wird auch als Line-Pressure oder Arbeitsdruck bezeichnet, eine oder mehrere Leitungen oder Kanäle, die den Arbeitsdruck führen, auch als Arbeitsdruckebene.

Es ist verständlich, dass die Förderleistung der Ölpumpe ausreichend hoch sein muss, um das Öl auf den gewünschten Arbeitsdruck beziehungsweise Staudruck vor dem Arbeitsdruckventil zu fördern. Ferner kommt hinzu, dass im Ölkreislauf vor und hinter der Pumpe, jedoch vor dem Arbeitsdruckventil, weitere vom Öl durchströmte Komponenten vorgesehen sind, die einen mehr oder minder großen Druckverlust bewirken, der zusätzlich durch die Ölpumpe ausgeglichen werden muss. Die Ölpumpe muss somit eine vergleichsweise höhere Leistung zur Verfügung stellen, als alleine durch die Anstauung des Ölstroms mit dem Arbeitsdruckventil erforderlich ist.

Um das Öl in dem Ölkreislauf vor einer unzulässigen Erwärmung aufgrund eines Wärmeeintrags durch verschiedene Komponenten in dem Ölkreislauf zu schützen, ist wenigstens ein Wärmetauscher vorgesehen, mit welchem die in den Ölkreislauf eingetragene Wärme aus dem Öl abgeleitet wird, beispielsweise an die Umgebung oder einen mit dem Wärmetauscher in wärmeübertragender Verbindung stehenden Kühlkreislauf. Ein solcher Wärmetauscher ist herkömmlich in Strömungsrichtung, ausgehend von der Ölpumpe aus betrachtet, vor der Arbeitsdruckebene positioniert, um sicherzustellen, dass die in Strömungsrichtung parallel zum Arbeitsdruckventil in der Arbeitsdruckebene angeordneten Schaltventile und gegebenenfalls weitere Komponenten vor der Beaufschlagung mit zu heißem Öl geschützt werden. So weisen die Schaltventile in der Regel nämlich elektrische Bauteile auf, die wärmeempfindlich sind.

US 2004/0204281 offenbort eine herkömmlichen Kreislauf.

Aufgrund der Positionierung des Wärmetauschers in Strömungsrichtung des Öls hinter der Ölpumpe und vor dem Arbeitsdruckventil führt der unvermeidlich im Wärmetauscher auftretende Druckverlust dazu, dass die Ölpumpe das geförderte Öl auf ein höheres Druckniveau fördern muss, als durch das Arbeitsdruckventil angestaut werden soll. Die Leistungsaufnahme der Ölpumpe ist dementsprechend vergleichsweise groß.

Der vorliegenden Erfindung liegt die Aufgabe zugrunde, einen Getriebeölkreislauf beziehungsweise ein Verfahren zum Steuern des Ölflusses in einem Getriebeölkreislauf anzugeben, bei welchem die Leistungsaufnahme der Ölpumpe, betrachtet über den gesamten Betriebsbereich, vergleichsweise verringert werden kann, ohne dass die Gefahr einer unzulässigen Wärmebeaufschlagung einzelner Bauteile im Getriebeölkreislauf entsteht.

Die erfindungsgemäße Aufgabe wird durch einen Getriebeölkreislauf mit den Merkmalen von Anspruch 1 und ein Verfahren gemäß dem Anspruch 6 gelöst. In den abhängigen Ansprüchen sind vorteilhafte und besonders zweckmäßige Ausgestattungen der Erfindung angegeben.

Der erfindungsgemäße Getriebeölkreislauf weist eine Ölpumpe zum Fördern von Öl aus einem Ölsumpf sowie einen Wärmetauscher, der von dem Öl durchströmt wird, um Wärme aus dem Öl abzuleiten, auf. Wie dargestellt, kann der Wärmetauscher sekundärseitig (bezogen auf den Ölkreislauf) durch Luft beziehungsweise Umgebungsluft oder aber auch durch einen Kühlmediumkreislauf beaufschlagt sein, solange der Wärmetauscher geeignet ist, Wärme aus dem Öl des Ölkreislaufes abzuleiten.

Im Getriebeölkreislauf ist ferner ein Arbeitsdruckventil vorgesehen, gegen welches die Ölpumpe das Öl fördert, insbesondere unmittelbar aus dem Ölsumpf oder auch saugseitig zur Ölpumpe rückgeführtes Öl. Als Arbeitsdruckventil wird in der Regel ein in seinem Strömungsquerschnitt veränderbares Ventil vorgesehen. Jedoch kommen auch andere Staueinrichtungen in Betracht, wie eine in ihrem Strömungsquerschnitt verstellbare Arbeitsdruckdrossel oder eine Arbeitsdruckdrossel mit konstantem Strömungsquerschnitt. Entscheidend ist nur, dass mittels des Arbeitsdruckventils der gewünschte Arbeitsdruck im Getriebeölkreislauf zur Verfügung gestellt werden kann, um Schaltventile und/oder sonstige Getriebekomponenten und/oder Aggregate außerhalb des Getriebes mit dem Öl druckzubetätigen oder mit Drucköl zu beaufschlagen und/oder um das Öl zur Druckölversorgung für diese zur Verfügung zu stellen. Die Schaltventile, Getriebekomponenten oder Aggregate außerhalb des Getriebes, die mit dem Öl auf dem angestauten Druckniveau versorgt werden sollen und welche man auch als Verbraucher bezeichnen könnte, obwohl sie das Öl nicht im eigentlichen Sinne verbrauchen müssen, können vor dem Arbeitsdruckventil und in Reihe zu diesem im Getriebeölkreislauf angeordnet sein und/oder in einer Versorgungsleitung, die vor dem Arbeitsdruckventil, insbesondere unmittelbar vor diesem abzweigt. Im letzteren Fall sind die Schaltventile beziehungsweise die Getriebekomponenten oder Aggregate außerhalb des Getriebes sozusagen parallel zu dem Arbeitsdruckventil angeordnet. Die Schaltventile, Getriebekomponenten oder Aggregate müssen natürlich nicht unmittelbar in der Versorgungsleitung positioniert sein, sondern können für die genannte Parallelschaltung auch in Strömungsrichtung des Öls hinter der Versorgungsleitung angeordnet sein. Das Arbeitsdruckventil ist vorteilhaft steuer- oder regelbar, um den Strömungsquerschnitt für das durchströmende Öl des Getriebeölkreislaufes zu variieren und somit eine mehr oder minder starke Anstauung zu ermöglichen, umfassend auch die vollständige Freigabe des Strömungsquerschnittes ohne Anstauung.

Um nun in jenen Betriebszuständen, in denen vergleichsweise wenig Wärme in das Öl des Getriebeölkreislaufes eingebracht wird und somit die Gefahr einer Beaufschlagung von Getriebekomponenten, insbesondere von Schaltventilen mit elektronischen Bauteilen durch zu warmes Öl des Getriebeölkreislaufes kaum oder nicht besteht, einen Druckverlust in Strömungsrichtung zwischen der Ölpumpe und dem Arbeitsdruckventil zu vermeiden, ist der Wärmetauscher erfindungsgemäß hinsichtlich der Reihenfolge der Durchströmung mit Öl, ausgehend von der Ölpumpe, wechselseitig vor oder hinter das Arbeitsdruckventil schaltbar. So kann in einem ersten Betriebszustand der Wärmetauscher vor das Arbeitsdruckventil geschaltet werden (erste Position) und das durch die Ölpumpe geförderte Öl erst durch den Wärmetauscher und anschließend durch das Arbeitsdruckventil gefördert werden, und in einem zweiten Betriebszustand kann der Wärmetauscher hinter das Arbeitsdruckventil geschaltet werden (zweite Position) und das durch die Ölpumpe geförderte Öl erst durch das Arbeitsdruckventil und anschließend durch den Wärmetauscher geleitet werden. Im zweiten Betriebszustand stellt sich somit kein Druckverlust durch einen Wärmetauscher zwischen der Ölpumpe und dem Arbeitsdruckventil ein, beziehungsweise wird, wenn zusätzlich zu dem schaltbaren Wärmetauscher ein weiterer Wärmetauscher zwischen der Ölpumpe und dem Arbeitsdruckventil vorgesehen ist, der Druckverlust durch Herausschalten des erfindungsgemäß schaltbar ausgeführten Wärmetauschers *vor* dem Arbeitsdruckventil vermindert.

Gemäß einer alternativen Ausführungsform der Erfindung, mit welcher dieselbe Wirkung erreicht werden kann, ist der schaltbare Wärmetauscher wechselseitig zwischen einer ersten Position vor den Schaltventilen, den sonstigen Getriebekomponenten und/oder anderen Aggregaten außerhalb des Getriebes oder, bei Anordnung dieser Schaltventile, Getriebekomponenten und/oder anderen Aggregaten in einer oder hinter einer vor dem Arbeitsdruckventil abzweigenden Versorgungsleitung, vor der Abzweigstelle und einer zweiten Position hinter den Schaltventilen, sonstigen Getriebekomponenten und/oder anderen Aggregaten beziehungsweise hinter der Abzweigstelle schaltbar. In diesem Fall kann nämlich, wenn das Schaltventil in die erste Position geschaltet ist, das Öl gekühlt werden, bevor es zu den Schaltventilen, sonstigen Getriebekomponenten und/oder anderen Aggregaten außerhalb des Getriebes gelangt, was mit einem Druckverlust bei der Strömung durch den schaltbaren Wärmetauscher verbunden ist, der durch die Ölpumpe durch eine größere Leistungsaufnahme ausgeglichen werden muss, um an der Abzweigstelle beziehungsweise an der Stelle der Schaltventile, sonstigen Getriebekomponenten und/oder anderen Aggregaten noch einen ausreichend hohen Arbeitsdruck zur Verfügung zu stellen. In der zweiten Position hingegen erfolgt der Druckverlust im Wärmetauscher in Strömungsrichtung hinter der Abzweigstelle beziehungsweise den Schaltventilen, sonstigen Getriebekomponenten und/oder anderen Aggregaten, sodass eine vergleichsweise geringere Anstauung mittels dem Arbeitsdruckventil eingestellt werden kann, welche sich zusammen mit dem Druckverlust im Wärmetauscher zu der gewünschten Stauwirkung aufaddiert, ohne dass die Ölpumpe den Druckverlust im Wärmetauscher ausgleichen muss.

Wenn ein hydrodynamischer Retarder vorgesehen ist, der mit dem Öl des Getriebeölkreislaufes und somit mit durch die Ölpumpe gefördertem Öl als Arbeitsmedium, das in den torusförmigen Arbeitsraum des Retarders eingebracht wird, um Drehmoment hydrodynamisch von einem Rotor auf einen Stator oder von einem Rotor auf einen Gegenlaufrotor zu übertragen, betrieben wird oder dessen Arbeitsmedium gemäß einer alternativen Ausführungsform in einem separaten Kreislauf geführt, jedoch durch den Getriebeölkreislauf gekühlt wird, so wird immer dann vergleichsweise viel Wärme in das Öl des Getriebeölkreislaufes eingebracht, wenn der Retarder eingeschaltet ist. Vorteilhaft wird daher der schaltbare Wärmetauscher im Getriebeölkreislauf immer dann in Strömungsrichtung des Öls, ausgehend von der Ölpumpe, vor das Arbeitsdruckventil oder gemäß der alternativen Ausführungsform in die erste Position vor den genannten Schaltventilen/sonstigen Getriebekomponenten/anderen Aggregaten beziehungsweise die Abzweigstelle geschaltet, wenn der Retarder eingeschaltet ist, wohingegen er in Strömungsrichtung hinter das Arbeitsdruckventil beziehungsweise bei der alternativen Ausgestaltung hinter die Schaltventile/sonstigen Getriebekomponenten/anderen Aggregate oder die Abzweigstelle geschaltet werden kann, wenn der Retarder ausgeschaltet ist. Im letzteren Fall ist jedoch zu beachten, dass dann kein anderweitig bedingter besonderer Wärmeeintrag in das Öl des Getriebeölkreislaufes vorliegt, beispielsweise durch einen hydrodynamischen Wandler, der optional im Getriebeölkreislauf vorgesehen werden kann und mit dem Öl des Getriebeölkreislaufes als Arbeitsmedium, vergleichbar zu dem Retarder, betrieben oder mit diesem Öl gekühlt wird. Dann könnte es nämlich erforderlich sein, dass der schaltbare Wärmetauscher nur dann in die zweite Position hinter dem Arbeitsdruckventil beziehungsweise hinter den Schaltventilen/sonstigen Getriebekomponenten/anderen Aggregaten oder die Abzweigstelle geschaltet wird, wenn sowohl der Retarder als auch die sonstige "besondere Wärmequelle", insbesondere der hydrodynamische Wandler, ausgeschaltet ist.

Wenn ein hydrodynamischer Retarder vorgesehen ist, der mit dem Öl des Getriebeölkreislaufes als Arbeitsmedium betrieben oder durch dieses Öl gekühlt wird, so kann im Getriebeölkreislauf vorteilhaft ein weiterer Wärmetauscher, vorliegend Retarderwärmetauscher genannt, vorgesehen sein, der von dem Öl durchströmt wird, um die Wärme aus dem Arbeitsmedium des Retarders abzuleiten. Wenn das Öl des Getriebeölkreislaufes zugleich das Arbeitsmedium des Retarders ist, wird der Retarderwärmetauscher eingesetzt, um die Wärme aus dem Öl des Getriebeölkreislaufes an die Umgebung oder einen Kühlkreislauf oder auf sonstige geeignete Weise abzuleiten. Wenn der Retarder mit einem eigenen Arbeitsmediumkreislauf getrennt vom Getriebeölkreislauf betrieben wird, kann ein erster Wärmetauscher - Flüssigkeits-Flüssigkeits-Wärmetauscher - vorgesehen sein, um die Wärme aus dem Arbeitsmediumkreislauf in den Getriebeölkreislauf zu übertragen, und ein im Getriebeölkreislauf dem ersten Wärmetauscher vorteilhaft nachgeschalteter zweiter Wärmetauscher, um die im ersten Wärmetauscher in den Getriebeölkreislauf eingebrachte Wärme an die Umgebung, einen Kühlkreislauf oder auf sonstige geeignete Weise aus dem Öl des Getriebeölkreislaufes abzuleiten. Der zweite Wärmetauscher wäre in diesem Fall der sogenannte Retarderwärmetauscher.

Wenn ein Retarderwärmetauscher vorgesehen ist, so ist der wahlweise vor oder hinter das Arbeitsdruckventil schaltbare Wärmetauscher vorteilhaft hinsichtlich der Reihenfolge der Durchströmung mit Öl, ausgehend von der Ölpumpe, wechselseitig parallel oder in Reihe zu dem Retarderwärmetauscher schaltbar, wobei die Schaltung in Reihe zu dem Retarderwärmetauscher vorteilhaft derart erfolgt, dass der (schaltbare) Wärmetauscher in Reihe vor dem Retarderwärmetauscher im Ölkreislauf positioniert ist.

Gemäß einer vorteilhaften Ausführungsform ist auch der Retarderwärmetauscher hinsichtlich der Reihenfolge der Durchströmung mit Öl des Getriebeölkreislaufes, ausgehend von der Ölpumpe, wechselseitig zwischen einer ersten Position vor und einer zweiten Position hinter dem Arbeitsdruckventil schaltbar. Auch hier kann die erste Position gemäß einer alternativen Ausgestaltung in Strömungsrichtung des Öls vor den Schaltventilen und/oder den sonstigen Getriebekomponenten und/oder den anderen Aggregaten außerhalb des Getriebes beziehungsweise bei Anordnung derselben in einer oder hinter einer abzweigenden Versorgungsleitung vor der Abzweigstelle liegen, und die zweite Position entsprechend hinter der Abzweigstelle oder hinter den Schaltventilen und/oder sonstigen Getriebekomponenten und/oder anderen Aggregaten liegen. Dies wird nachfolgend noch anhand der Figuren exemplarisch beschrieben werden.

Wenn ein hydrodynamischer Wandler vorgesehen ist, der mit durch die Ölpumpe gefördertem Öl, das heißt dem Öl des Getriebeölkreislaufes, oder auch einem anderen Medium in einem separaten Kreislauf als Arbeitsmedium betrieben wird, so bringt auch der hydrodynamische Wandler immer dann, wenn er eingeschaltet ist, Wärme in das Öl des Getriebeölkreislaufes ein. Vorteilhaft wird daher der schaltbare Wärmetauscher immer dann in Strömungsrichtung in die erste Position geschattet, wenn der hydrodynamische Wandler eingeschaltet ist, und in die zweite Position geschaltet, wenn der hydrodynamische Wandler ausgeschaltet ist. Im letzteren Fall gilt das zuvor mit Bezug auf den optional vorgesehenen Retarder Ausgeführte entsprechend. Eine Schaltung des schaltbaren Wärmetauschers in Strömungsrichtung des Öls vergleichsweise weiter hinten in die zweite Position sollte auch bei ausgeschaltetem hydrodynamischem Wandler vermieden werden, wenn eine weitere intensive Wärmequelle im Getriebeölkreislauf eingeschaltet ist, beispielsweise ein Retarder.

Um die gewünschten Umschaltungen des schaltbaren Wärmetauschers und insbesondere, sofern vorgesehen, des schaltbaren Retarderwärmetauschers zu erreichen, kann eine oder eine Vielzahl von Steuereinrichtungen vorgesehen sein, die eine entsprechende Steuerlogik umfassen, um den Wärmetauscher gemäß der beschriebenen Abhängigkeiten zu schalten. Die eine Steuereinrichtung oder die Vielzahl von Steuereinrichtungen kann ferner vorteilhaft zugleich dazu verwendet werden, um den Retarder und/oder den hydrodynamischen Wandler ein- und auszuschalten. Selbstverständlich können weitere Steueraufgaben durch die Steuereinrichtung unternommen werden. Dabei ist es beliebig, ob die Steuerlogik in einer einzigen Steuereinrichtung oder verteilt über mehrere Steuereinrichtungen vorgesehen ist.

Das erfindungsgemäße Verfahren zeichnet sich durch die Schritte des Förderns von Öl aus dem Ölsumpf mittels der Ölpumpe, des Stauens des geförderten Öls mittels des Arbeitsdruckventils und des Kühlens des Öls mittels des Wärmetausches aus, wobei in dem beschriebenen ersten Betriebszustand der Wärmetauscher hinsichtlich der Strömung des Öls im Getriebeölkreislauf, ausgehend von der Ölpumpe in Strömungsrichtung vor das Arbeitsdruckventil (erste Position) und in einem zweiten Betriebszustand hinter das Arbeitsdruckventil (zweite Position) geschaltet wird. Der erste Betriebszustand kann, wie zuvor erläutert, durch Zuschalten eines hydrodynamischen Retarders und/oder eines hydrodynamischen Wandlers gekennzeichnet sein, also durch einen Betriebszustand, in dem eine vergleichsweise große Wärmemenge in den Getriebeölkreislauf eingebracht wird. Der zweite Betriebszustand kann dadurch gekennzeichnet sein, dass die wärmeintensiven Aggregate, das heißt insbesondere der hydrodynamische Wandler und der hydrodynamische Retarder, ausgeschaltet sind.

Auch hier ist gemäß einer alternativen Ausgestaltung der Erfindung eine erste Position in Strömungsrichtung des Öls vor den Schaltventilen und/oder sonstigen Getriebekomponenten und/oder anderen Aggregaten außerhalb des Getriebes beziehungsweise bei Anordnung derselben in einer oder hinter einer abzweigenden Versorgungsleitung vor der Abzweigstelle möglich, wobei dann die zweite Position entsprechend hinter der Abzweigstelle oder den Schaltventilen/Getriebekomponenten/anderen Aggregaten vorgesehen ist.

Die Erfindung soll nun nachfolgend anhand eines Ausführungsbeispieles exemplarisch erläutert werden.

Es zeigen:
- Figur 1: einen erfindungsgemäß ausgebildeten Getriebeölkreislauf;
- Figur 2: den Ölfluss in dem Getriebeölkreislauf gemäß der Figur 1 im ersten Gang des Getriebes bei ausgeschaltetem Retarder;
- Figur 3: den Ölfluss im ersten Gang des Getriebes, jedoch bei eingeschaltetem Retarder;
- Figur 4: den Ölfluss im zweiten und jedem höheren Gang bei ausgeschaltetem Retarder;
- Figur 5: den Ölfluss im zweiten und jedem höheren Gang bei eingeschaltetem Retarder.

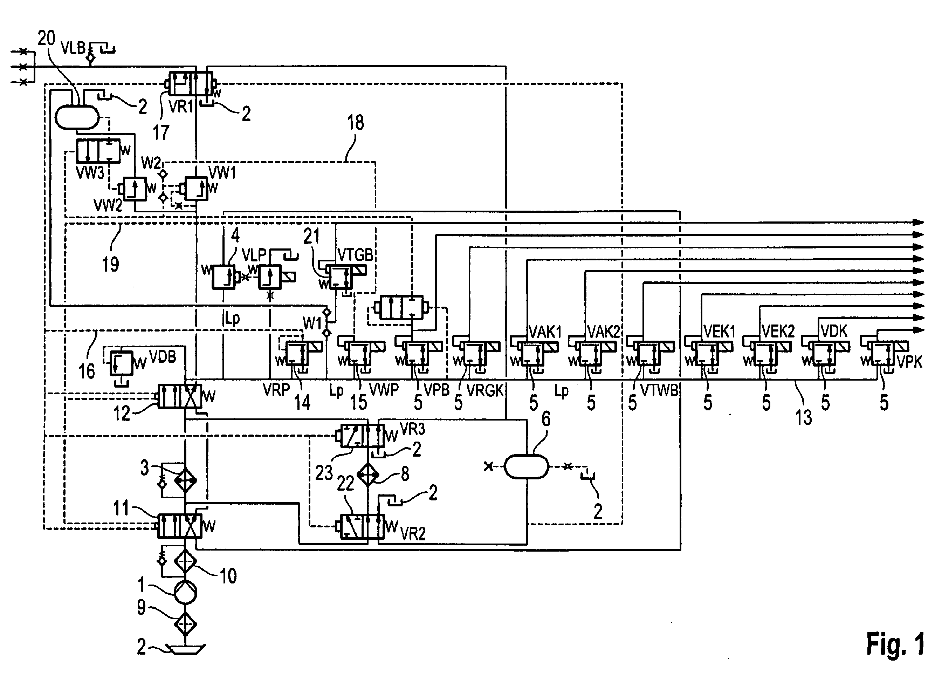

In der Figur 1 ist ein Getriebeölkreislauf in einem Ausschnitt dargestellt, umfassend eine Ölpumpe 1, die Öl aus einem Ölsumpf 2 frei fördert. Im gezeigten Ausführungsbeispiel sind in Strömungsrichtung des Öls vor der Ölpumpe 1, die beispielsweise als Zahnradpumpe ausgeführt sein kann, ein Ölsieb 9 und in Strömungsrichtung hinter der Ölpumpe 1 ein Feinfilter 10 vorgesehen. Diese Elemente stellen jedoch nur Optionen dar und müssen nicht zwingend ausgeführt werden.

Im weiteren Verlauf der Strömung des Öls hinter der Ölpumpe 1 ist ein Wärmetauscher 3, welcher den erfindungsgemäß schaltbaren Wärmetauscher darstellt, im Ölkreislauf angeordnet. Vorliegend ist der Wärmetauscher 3 mittels eines Bypasses mit einem Rückschlagventil umgehbar, welcher bei einem vorgegebenen Öffnungsdruck Öl am Wärmetauscher 3 vorbeileitet, um einen übermäßigen Druckverlust zu vermeiden. Der Öffnungsdruck kann beispielsweise zwischen 1 und 5 bar, insbesondere bei 2 bar Druckdifferenz zwischen dem Einlass des Wärmetauschers 3 und dem Auslass des Wärmetauschers 3 liegen. Der Wärmetauscher 3 könnte auch als Sumpfwärmetauscher bezeichnet werden.

Dem Wärmetauscher 3 ist in Strömungsrichtung des Öls ein erstes Schaltventil 11 vorgeschaltet und ein zweites Schaltventil 12 nachgeschaltet, welche dazu dienen, den Wärmetauscher 3 hinsichtlich seiner Positionierung im Ölkreislauf vor oder hinter das Arbeitsdruckventil 4 zu schalten, wie nachfolgend noch erläutert wird.

Das Arbeitsdruckventil 4 dient dem Anstauen eines Arbeitsdruckes auf der Arbeitsdruckebene 13, die durch einen entsprechenden Kanal beziehungsweise eine entsprechende Leitung gebildet wird, (auch Arbeitsdruckschiene oder Line genannt), von welcher Leitungen mit Schaltventilen 5 abzweigen und zu verschiedenen Getriebekomponenten (nicht dargestellt) führen. Durch die Schaltventile 5 wird bestimmt, ob eine bestimmte Getriebekomponente (oder ein anderes Aggregat außerhalb des Getriebes) mit dem Drucköl aus der Arbeitsdruckebene 13 beaufschlagt wird, indem das entsprechende Schaltventil 5 in der abzweigenden Leitung mehr oder minder geöffnet wird.

Im gezeigten Ausführungsbeispiel sind an der Arbeitsdruckebene 13 ferner ein Retarderdruckventil 14, sowie ein Wandlerdruckabsenkungsventil 15 angeschlossen. Mittels des Retarderdruckventils 14 wird in einer Steuerdruckleitung 16 ein vorgegebener Steuerdruck eingestellt, der zum einen dem Einschalten und Ausschalten des Retarders 6 und zum anderen zum Einstellen eines vorgegebenen Überlagerungsdruckes im Retarder 6 im eingeschalteten Zustand des Retarders 6, um ein vorgegebenes Bremsmoment des Retarders einzustellen, dient. Hierzu ist in der Steuerdruckleitung 16 ein Retarderschaltventil 17 vorgesehen, das in einem ersten Schaltzustand den Retarder 6 mit dem Ölsumpf 2 (oder einem separaten Ölsumpf) verbindet, und in einem zweiten Schaltzustand Öl aus dem Getriebeölkreislauf, insbesondere durch die Ölpumpe 1 gefördertes Öl, in den Arbeitsraum des Retarders 6 einleitet, wobei dann, wie nachfolgend noch erläutert wird, im vorliegenden Ausführungsbeispiel ein Retarderölkreislauf innerhalb des Getriebeölkreislaufes ausgebildet wird, in welchem ein Retarderwärmetauscher 8 zum Abführen der durch den Retarder 6 in das Öl eingebrachten Wärme vorgesehen ist.

Ferner beaufschlagt die Steuerdruckleitung 16, in welcher ein Steuerdruck in Abhängigkeit der Stellung des Retarderdruckventils 14 eingestellt wird, das erste Schaltventil 11 vor dem Wärmetauscher 3 und das zweite Schaltventil 12 hinter dem Wärmetauscher 3, um die gewünschte Umschaltung des Wärmetauschers 3 hinsichtlich seiner Position im Getriebeölkreislauf zu bewirken, immer dann, wenn der Retarder 6 eingeschaltet wird und ausgeschaltet wird.

Entsprechend der (ersten) Steuerdruckleitung 16 zur Steuerung beziehungsweise zum Einschalten und Ausschalten des Retarders 6 ist eine zweite Steuerdruckleitung 18 vorgesehen, die am Wandlerdruckabsenkungsventil 15 angeschlossen ist, wobei der Steuerdruck in der zweiten Steuerdruckleitung 18 durch die Stellung des Wandlerdruckabsenkungsventils 15 bestimmt wird. Durch den Steuerdruck kann der Druck im Arbeitsraum des hydrodynamischen Wandlers 20 gezielt abgesenkt werden, um die mit dem Wandler übertragene Antriebsleistung zu vermindern.

Eine dritte Steuerdruckleitung 19 beaufschlagt das erste Schaltventil 11 vor dem Wärmetauscher 3 und das zweite Schaltventil 12 hinter dem Wärmetauscher 3 immer dann mit Steuerdruck, wenn der Wandler 20 eingeschaltet wird. Hierzu ist ein entsprechendes Steuerdruckventil 21, vorliegend in einer Leitung abzweigend von der Arbeitsdruckebene 13, vorgesehen.

Die Getriebekomponenten, die über die Schaltventile 5 angesteuert werden, sind beispielsweise Kupplungen, Bremsen oder Klauen, um bestimmte Gänge in dem Getriebe einzustellen oder um den Wandler 20 ein- oder auszuschalten.

Für den, vorliegend mit Öl aus dem Getriebeölkreislauf als Arbeitsmedium beaufschlagten Retarder 6 ist ein Retarderwärmetauscher 8 vorgesehen, dessen Position hinsichtlich der Durchströmung mit Öl im Getriebeölkreislauf ebenfalls umgeschaltet werden kann. Hierfür sind in Strömungsrichtung des Öls vor dem Retarderwärmetauscher 8 ein erstes Retarderwärmetauscherschaltventil 22 und hinter dem Retarderwärmetauscher 8 ein zweites Retarderwärmetauscherschaltventil 23 vorgesehen, die parallel zum ersten Schaltventil 11 und zweiten Schaltventil 12 vor und hinter dem Wärmetauscher 3 mit Steuerdruck aus der ersten Steuerdruckleitung 16 beaufschlagt werden.

Ferner kann, wie dargestellt, der Retarder 6 mit dem Ölsumpf 2 (oder einem separaten Ölsumpf) über eine Leitung mit vergleichsweise kleinem Querschnitt verbunden sein, beziehungsweise kann über undichte Stellen im Retarder 6 austretendes Öl in den Ölsumpf 2 (oder den separaten Ölsumpf) in den Ölkreislauf zurückgeführt werden. Bei dem gezeigten Ausführungsbeispiel kann ferner eine Verbindung des Retarders 6 beziehungsweise des für den Retarder 6 gebildeten Ötkreislaufes über das erste Retarderwärmetauscherschattventil 22 und/oder das zweite Retarderwärmetauscherschaltventil 23 mit dem Ölsumpf 2 (oder einem separaten Ölsumpf) hergestellt werden, um den Arbeitsraum des Retarders zu entleeren, wenn der Retarder 6 ausgeschaltet wird.

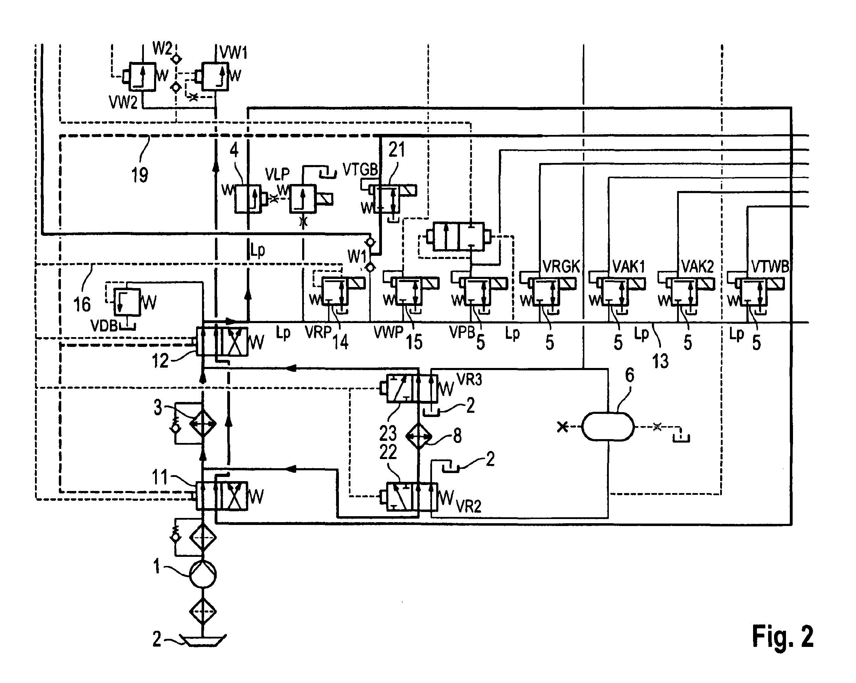

In der Figur 2 ist nun der Ölfluss im Getriebeölkreislaufdargestellt, wenn der erste Gang im Getriebe eingelegt ist und der Retarder 6 ausgeschaltet ist, und zwar anhand eines Ausschnittes der Figur 1. Sich entsprechende Bauteile sind mit sich entsprechenden Bezugszeichen bezeichnet.

Im ersten Gang wird Antriebsleistung über den hydrodynamischen Wandler 20 (in der Figur 2 nicht dargestellt) hydrodynamisch von einer Antriebsmaschine (nicht dargestellt), insbesondere Verbrennungsmotor, auf Antriebsräder (nicht dargestellt) des Fahrzeugs übertragen. Dementsprechend fällt im hydrodynamischen Wandler 20 Wärme an, welche durch das Öl des Getriebeölkreislaufes aufgenommen wird und, sofern das Öl vor der Arbeitsdruckebene 13 nicht ausreichend gekühlt wird, zu einer Überhitzung von elektronischen Bauteilen in den Schaltventilen 5 führen könnte. Dementsprechend ist der Wärmetauscher 3, und im vorliegenden Ausführungsbeispiel parallel hierzu der Retarderwärmetauscher 8 in Strömungsrichtung des Öls, ausgehend von dem Ölsumpf 2 beziehungsweise der Ölpumpe 1, dem Arbeitsdruckventil 4 vorgeschaltet. Im Einzelnen strömt das Öl aus der Ölpumpe 1 durch das erste Schaltventil 11, dann parallel durch den Wärmetauscher 3 und den Retarderwärmetauscher 8, wieder vereint durch das zweite Schaltventil 12, durch das Arbeitsdruckventil 4, anschließend durch eine zweite Leitung im ersten Schaltventil 11, durch eine zweite Leitung im zweiten Schaltventil 12 und zum hydrodynamischen Wandler (über die durchgezogene fette Linie links oben in der Figur 2). Somit wird das Öl sowohl in dem Wärmetauscher 3 als auch in dem Retarderwärmetauscher 8 gekühlt, bevor es zur Arbeitsdruckebene 13, die vor dem Arbeitsdruckventil 4 abzweigt, und damit den Schaltventilen 5, strömt. In dem in der Figur 2 gezeigten Schaltzustand ist die dritte Steuerdruckleitung 19 mit Steuerdruck beaufschlagt, was bewirkt, dass das erste Schaltventil 11 und das zweite Schaltventil 12 in den gezeigten Stellungen verbleiben. Aufgrund dessen, dass die erste Steuerdruckleitung 16 drucklos ist beziehungsweise mit einem Steuerdruck unterhalb eines Grenzwertes beaufschlagt ist, sind das erste Retarderwärmetauscherschaltventil 22 und das zweite Retarderwärmetauscherschaltventil 23 in jener gezeigten Stellung positioniert, bei welcher der Retarder 6 mit dem Ölsumpf 2 (oder einem separaten Ölsumpf) verbunden ist, ergänzend zu der Ölsumpfverbindung über das in der Figur 1 gezeigte Retarderschaltventil 17, welches ebenfalls nicht mit einem ausreichenden Steuerdruck in der ersten Steuerdruckleitung 16 angesteuert wird.

Bei den hier gezeigten Ausführungsbeispielen sind die an den Steuerdruckleitungen angeschlossenen Ventile als Wegeventile oder Wegeschieber ausgeführt, die entgegen dem jeweiligen Steuerdruck vorgespannt sind, beispielsweise mittels einer Druckfeder.

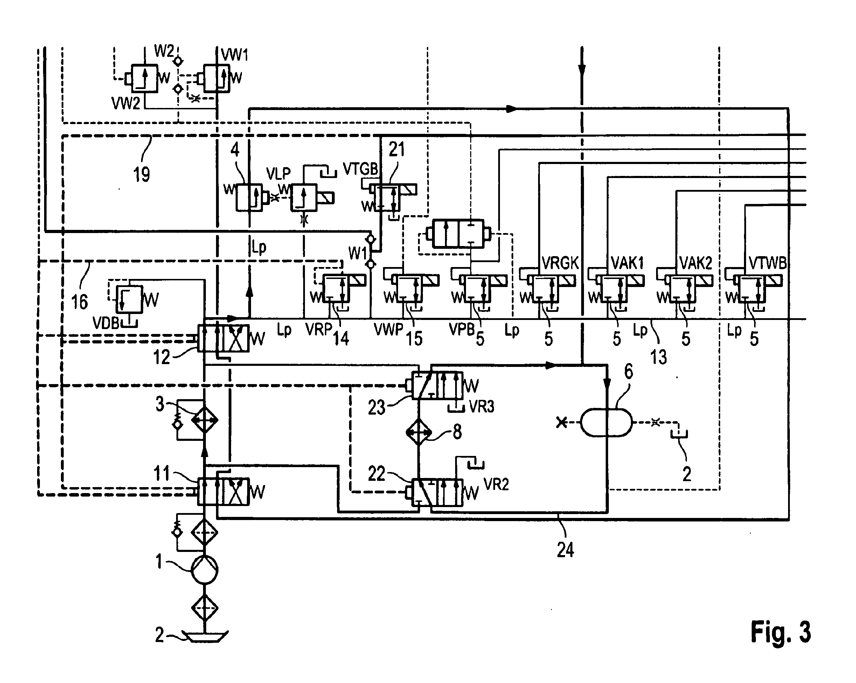

In der Figur 3 ist nun der Betriebszustand gezeigt, in dem zusätzlich der Retarder 6 eingeschaltet ist. In diesem Fall ist die erste Steuerdruckleitung 16 zusätzlich mit Steuerdruck beaufschlagt, was zwar an der Schaltstellung des ersten Schaltventils 11 und des zweiten Schaltventils 12 nichts ändert (diese Ventile sind bereits durch den Steuerdruck der dritten Steuerdruckleitung 19 beaufschlagt und somit entgegen der Kraft der Feder in den gezeigten Schaltzustand verschoben), das heißt, der Wärmetauscher 3 bleibt nach wie vor in Strömungsrichtung des Öls vor das Arbeitsdruckventil 4 geschaltet, jedoch werden das erste Retarderwärmetauscherschaltventil 22 und das zweite Retarderwärmetauscherschaltventil 23 derart umgeschaltet, dass nun der Retarderwärmetauscher 8 in Strömungsrichtung des Öls zusammen mit dem Retarder 6 hinter das Arbeitsdruckventil 4 geschaltet ist, und zwar vorliegend derart, dass innerhalb des Getriebeölkreislaufes ein Retarderölkreislauf 24 gebildet wird, in welchem im Retarder 6 Wärme in das Öl eingeleitet und im Retarderwärmetauscher 8 aus dem Öl abgeführt wird.

Durch die gewählte Reihenfolge der Durchströmung der einzelnen Aggregate im Getriebeölkreislauf wird Folgendes erreicht: Äufgrund dessen, dass durch den hydrodynamischen Retarder 6 ein Wärmeeintrag in den Ölsumpf 2 erfolgt, insbesondere durch Undichtigkeiten im Retarder 6, kann das durch die Ölpumpe 1 geförderte Öl eine vergleichsweise hohe Temperatur aufweisen, welche ungünstig für die Schaltventile 5 beziehungsweise die in den Schaltventilen 5 enthaltenen elektrischen Bauteile ist. Der Wärmetauscher 3 (Sumpfwärmetauscher) ist daher in Strömungsrichtung des Öls vor das Arbeitsdruckventil 4 und somit auch vor die Arbeitsdruckebene 13 geschaltet. Ein weiterer Grund für das Vorschalten des Wärmetauschers 3 vor das Arbeitsdruckventil 4 und damit die Arbeitsdruckebene 13 ist der eingeschaltete hydrodynamische Wandler, welcher ebenfalls einen Wärmeeintrag in den Ölsumpf 2 bewirken kann, siehe die gezeigte Verbindung des hydrodynamischen Wandlers 20 mit dem Ölsumpf 2 gemäß der Figur 1. Der Wärmetauscher 3 reduziert die Temperatur des durch die Ölpumpe 1 geförderten Öls auf ein Temperaturniveau, das für die Schaltventile 5 unkritisch ist.

Der in den Figuren 2 und 3 gezeigte Betriebszustand mit eingeschaltetem hydrodynamischem Wandler oder mit gemeinsam eingeschaltetem hydrodynamischem Wandler und hydrodynamischem Retarder wird vorliegend auch als erster Betriebszustand bezeichnet.

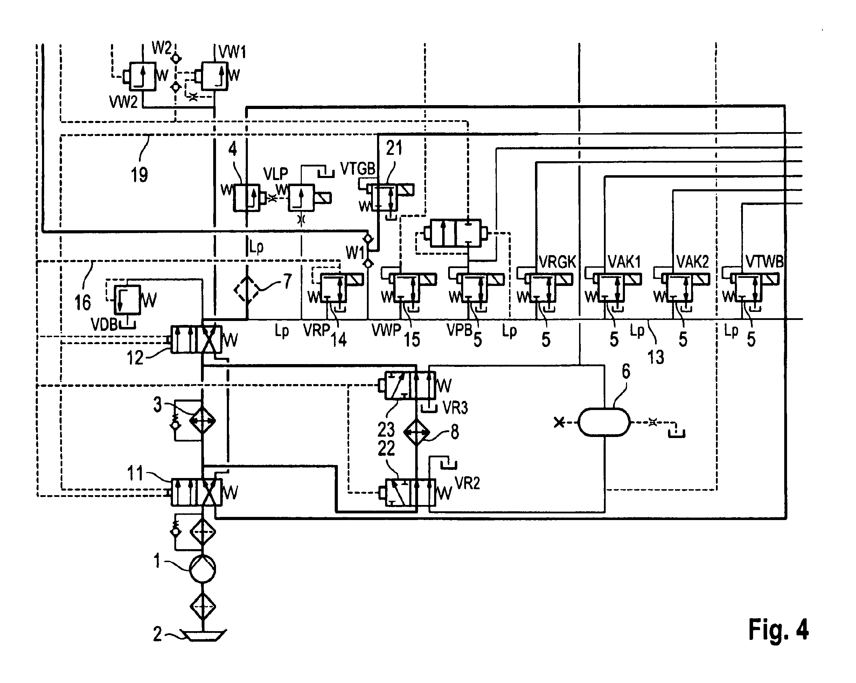

In der Figur 4 ist nun der vorliegend als zweiter Betriebszustand bezeichnete Zustand dargestellt, in welchem die "Wärmequellen" hydrodynamischer Wandler und hydrodynamischer Retarder ausgeschaltet sind. In diesem zweiten Betriebszustand pumpt die Ölpumpe 1 das Öl aus dem Ölsumpf 2 zunächst durch die gewählte Schaltstellung des ersten Schaltventils 11 und des zweiten Schaltventils 12 (weder in der ersten Steuerdruckleitung 16 noch in der dritten Steuerdruckleitung 19 liegt ein Steuerdruck an, welcher die Ventile entgegen der Kraft der Feder schaltet) am Wärmetauscher 3 vorbei in die Arbeitsdruckebene 13 beziehungsweise durch das Arbeitsdruckventil 4. Somit wird das Öl aus dem Ölsumpf 2 zwar nicht gekühlt, bevor es in die Arbeitsdruckebene 13 und das Arbeitsdruckventil 4 eintritt, was jedoch im vorliegenden Fall unkritisch ist, da kein größerer Wärmeeintrag in das Öl im Ölsumpf 2 erfolgt. Als erheblicher Vorteil ergibt sich, dass ein Druckverlust über dem Wärmetauscher 3, der 2 bis 3 bar betragen kann, in Strömungsrichtung vor dem Hauptdruckventil eingespart werden kann, was eine 20 - 30 % geringere Leistungsaufnahme der Ölpumpe 1 ermöglicht und somit, bei Anwendung in einem Kraftfahrzeug, Antriebsleistung, insbesondere des Verbrennungsmotors, der die Ölpumpe 1 antreibt, kraftstoffsparend reduziert.

In Strömungsrichtung hinter dem Arbeitsdruckventil 4 strömt das Öl dann durch die wiederum parallel geschalteten Wärmetauscher 3 und Retardervvärmetauscher 8 und wird in beiden Wärmetauschern gekühlt. Die Parallelschaltung der beiden Wärmetauscher bewirkt, wie auch bei dem in der Figur 2 gezeigten Schaltzustand, eine Druckverlustreduzierung aufgrund des für den Ölstrom zur Verfügung stehenden vergleichsweise größeren gemeinsamen Strömungsquerschnitt, der durch die beiden Wärmetauscher ausgebildet wird. Somit kann auch hierdurch nochmals eine Wirkungsgradsteigerung beziehungsweise Verlustreduzierung im Ölkreislauf erreicht werden. Die gezeigte Stellung des ersten Retarderwärmetauscherschaltventils 22 und des zweiten Retarderwärmetauscherschattventils 23 wird dadurch erreicht, dass in der ersten Steuerdruckleitung 16 kein beziehungsweise kein ausreichender Steuerdruck ansteht, welcher die Ventile entgegen der Kraft der Feder schalten könnte.

Bei dem in der Figur 4 gezeigten Betriebszustand entsprechen die Schaltstellungen des ersten Retarderwärmetauscherschaltventils 22 und des zweiten Retarderwärmetauscherschaltventils 23 den Schaltstellungen dieser Ventile gemäß der Figur 2, um die gewünschte Parallelschaltung der beiden Wärmetauscher zu erreichen, wohingegen die Schaltstellungen des ersten Schaltventils 11 und des zweiten Schaltventils 12 gegenüber den Schaltstellungen in den Figuren 2 und 3 umgeschaltet sind, um den Wärmetauscher 3 hinter das Arbeitsdruckventil 4 zu schalten.

Wenn das Getriebe nur im ersten Gang mit hydrodynamischem Wandler beziehungsweise einer Leistungsübertragung mittels des hydrodynamischen Wandlers betrieben wird, so entspricht der Betriebszustand gemäß der Figur 4 jenem aller höheren Gänge ohne Einsatz des hydrodynamischen Retarders, beispielsweise der "mechanischen" Gänge 2 bis 5. Wenn mehrere hydrodynamische Gänge vorgesehen sind, beispielsweise der hydrodynamische Wandler im ersten und im zweiten Gang zum hydrodynamischen (An-)Fahren eingeschaltet ist, würde sich die Nummer der rein mechanischen Gänge entsprechend erhöhen, beispielsweise auf 3 bis 5.

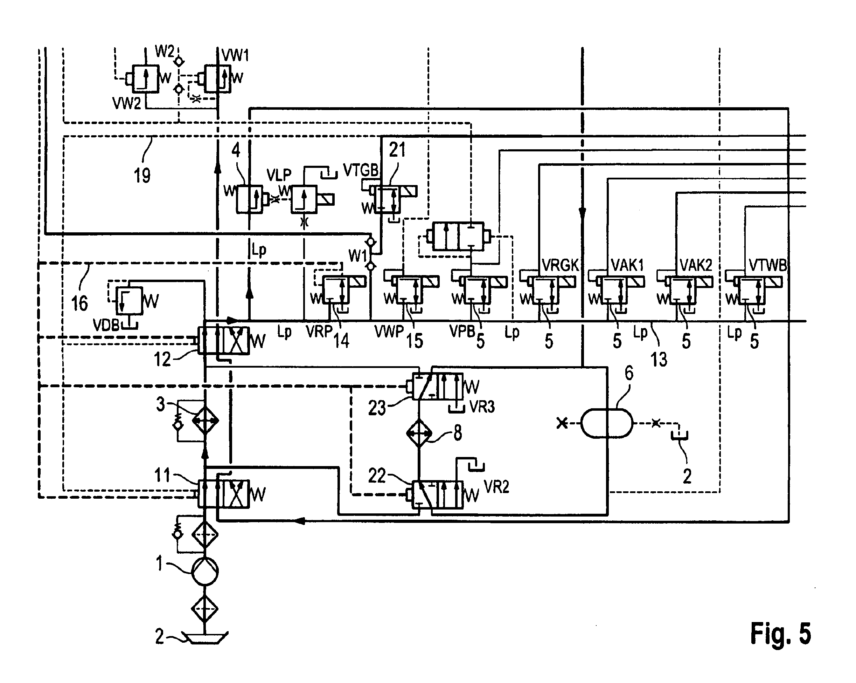

In der Figur 5 ist nun der Betriebszustand gezeigt, in welchem zwar der hydrodynamische Wandler beziehungsweise die Leistungsübertragung über den hydrodynamischen Wandler ausgeschaltet ist, jedoch der Retarder 6 eingeschaltet ist. Somit erfolgt ein Wärmeeintrag in den Ölsumpf 2 und das erste Schaltventil 11 sowie das zweite Schaltventil 12 werden durch einen entsprechenden Steuerdruck in der ersten Steuerdruckleitung 16 in jene Schaltstellung geschaltet, in welcher der Wärmetauscher 3 in Strömungsrichtung des Öls vor dem Arbeitsdruckventil 4 und damit vor der Arbeitsdruckebene 13 positioniert ist. Der Retarder 6 beziehungsweise der Retarderwärmetauscher 8 hingegen ist durch entsprechendes Umschalten des ersten Retarderwärmetauscherschaltventils 22 und zweiten Retarderwärmetauscherschaltventils 23 in Strömungsrichtung hinter dem Arbeitsdruckventil 4 positioniert. Dieses Umschalten sowie das Einschalten des Retarders 6 wird wiederum dadurch bewirkt, dass in der Steuerdruckleitung 16 ein Steuerdruck angelegt wird, wohingegen in der dritten Steuerleitung 19 kein Steuerdruck-angelegt ist, da der hydrodynamische Wandler ausgeschaltet ist.

In jenen Schaltzuständen, in denen der Retarder 6 eingeschaltet ist (Figuren 3 und 5) und somit der Wärmetauscher 3 in Strömungsrichtung vor dem Arbeitsdruckventil 4 positioniert ist, muss die Ölpumpe 1 eine vergleichsweise größere Leistung aufnehmen, da sie das Öl aus dem Ölsumpf 2 auf ein Druckniveau fördern muss, dass oberhalb des durch das Arbeitsdruckventil 4 eingestellten Druckes liegt, nämlich mindestens um den Betrag des Druckverlustes im Wärmetauscher 3 sowie gegebenenfalls der weiteren vorgesehenen Aggregate (Ölsieb, Feinfilter, Ventile und dergleichen) erhöht ist. In diesen Betriebszuständen ist jedoch eine erhöhte Leistungsaufnahme durch die Ölpumpe 1 nicht schädlich, da dies zu einem Abbremsen des Antriebsmotors, in der Regel des Verbrennungsmotors, der zum Antrieb eines Fahrzeugs verwendet wird, führt, was im Bremsbetrieb (der Retarder 6 ist ja eingeschaltet) erwünscht ist.

Die Erfindung ermöglicht also immer dann eine Einsparung von Antriebsleistung im Traktionsbetrieb des Fahrzeugs außerhalb eines hydrodynamischen Anfahrens (mit dem Wandler) und somit eben in jenem Betriebszustand, der im Betrieb eines Fahrzeugs in der Regel am häufigsten auftritt. Anstelle des hydrodynamischen Wandlers kann auch eine hydrodynamische Kupplung verwendet werden, mit denselben Vorteilen und Wirkungen der erfindungsgemäß vorgesehenen Umschaltmöglichkeit des Wärmetauschers 3.

Abweichend von der zuvor anhand der Figuren erläuterten Ausführungsform kann die erfindungsgemäße Wirkung auch dadurch erreicht werden, dass der schaltbare Wärmetauscher 3 in dem Betriebszustand, in welchem vergleichsweise wenig Wärme in das Öl eingetragen wird (zweiter Betriebszustand) nicht hinter das Arbeitsdruckventil 4 geschaltet wird, sondern "nur" hinter die Abzweigstelle vor dem Arbeitsdruckventil 4, an welcher die Arbeitsdruckebene 13 abzweigt. Diese Position des schaltbaren Wärmetauschers ist in der Figur 4 in gestrichelten Linien eingezeichnet und mit dem Bezugszeichen 7 versehen. Wenn die Position 7 als zweite Position des schaltbaren Wärmetauschers 3 gewählt wird, wohingegen die erste Position in Strömungsrichtung des Öls vor der Abzweigstelle angeordnet ist, so tritt in der zweiten Position kein Druckverlust durch den schaltbaren Wärmetauscher 3 vor der Abzweigstelle auf, der durch die Ölpumpe 1 überwunden werden muss. Vielmehr tritt der Druckverlust erst hinter der Abzweigstelle auf, was jedoch unschädlich ist, da dieser Verlust durch eine entsprechend weniger starke Anstauung mittels des Arbeitsdruckventils 4 ausgeglichen werden kann.

Auch wenn es vorliegend nicht detailliert dargestellt ist, könnte der Getriebekreislauf grundsätzlich auch mit einem anderen Medium als Öl betrieben werden, wobei die Erfindung mit derselben Wirkung angewandt werden kann. Der Begriff Ölkreislauf ist demnach umfassend zu verstehen und soll nicht nur das Medium Öl, sondern auch andere gleichwertige Medien einschließen.

## Patentansprüche

1. Getriebeölkreislauf
1.1 mit einer Ölpumpe (1) zum Fördern von Öl oder einem anderen Medium aus einem Ölsumpf (2) oder entsprechenden Mediumsumpf;
1.2 mit einem Wärmetauscher (3), der von dem Öl durchströmt wird, um Wärme aus dem Öl abzuleiten;
1.3 mit einem Arbeitsdruckventil (4), gegen welches die Ölpumpe (1) das Öl fördert, um das geförderte Öl auf einen vorgegebenen Arbeitsdruck zur Druckbetätigung, Druckölbeaufschlagung oder Druckölversorgung von Schaltventilen (5) und/oder sonstigen Getriebekomponenten und/oder anderen Aggregaten außerhalb des Getriebes, die in Strömungsrichtung vor dem Arbeitsdruckventil (4) in Reihe zu diesem oder in einer oder in Strömungsrichtung hinter einer Versorgungsleitung (13), die vor dem Arbeitsdruckventil (4) im Getriebeölkreislauf abzweigt, angeordnet sind, zu bringen;
**dadurch gekennzeichnet, dass**
1.4 der Wärmetauscher (3) hinsichtlich der Reihenfolge der Durchströmung mit Öl ausgehend von der Ölpumpe (1) wechselseitig in eine erste Position vor oder eine zweite Position hinter dem Arbeitsdruckventil (4) schaltbar ist, oder
1.5 der Wärmetauscher (3) hinsichtlich der Reihenfolge der Durchströmung mit Öl ausgehend von der Ölpumpe (1) wechselseitig in eine erste Position vor oder eine zweite Position hinter den Schaltventilen (5), sonstigen Getriebekomponenten und/oder anderen Aggregaten oder bei Anordnung in oder hinter der abgezweigten Versorgungsleitung (13) in eine erste Position vor oder eine zweite Position hinter der Abzweigstelle schaltbar ist.

2. Getriebeölkreislauf gemäß Anspruch 1, **dadurch gekennzeichnet, dass** ein hydrodynamischer Retarder (6) vorgesehen ist, der mit durch die Ölpumpe (1) gefördertem Öl oder einem anderen Medium in einem separaten Kreislauf als Arbeitsmedium versorgt wird, und wenigstens eine Steuereinrichtung vorgesehen ist, welche eingerichtet ist, um den Retarder (6) ein- und auszuschalten sowie den Wärmetauscher (3) wechselseitig zu schalten, und die wenigstens eine Steuereinrichtung eine Steuerlogik aufweist, die den Wärmetauscher (3) immer dann in die erste Position schaltet, wenn der Retarder (6) eingeschaltet ist, und - gegebenenfalls unter Berücksichtigung von weiterem Wärmeeintrag - dann in die zweite Position schaltet, wenn der Retarder (6) ausgeschaltet ist.

3. Getriebeölkreislauf gemäß Anspruch 2, **dadurch gekennzeichnet, dass** ein von dem Öl durchströmter Retarderwärmetauscher (8) vorgesehen ist, um Wärme aus dem Arbeitsmedium des Retarders (6) abzuleiten, und der Wärmetauscher (3) hinsichtlich der Reihenfolge der Durchströmung mit Öl ausgehend von der Ölpumpe (1) wechselseitig parallel oder in Reihe zu dem Retarderwärmetauscher (8) schaltbar ist, letzteres insbesondere in Reihe vor den Retarderwärmetauscher (8).

4. Getriebeölkreislauf gemäß Anspruch 3, **dadurch gekennzeichnet, dass** auch der Retarderwärmetauscher (8) hinsichtlich der Reihenfolge der Durchströmung mit Öl ausgehend von der Ölpumpe (1) wechselseitig in eine erste Position vor oder zweite Position hinter dem Arbeitsdruckventil (4) schaltbar ist, oder wechselseitig in eine erste Position vor oder zweite Position hinter den Schaltventilen (5), sonstigen Getriebekomponenten und/oder anderen Aggregaten oder bei Anordnung derselben in der oder hinter der abgezweigten Versorgungsleitung (13) in eine erste Position vor oder zweite Position hinter der Abzweigstelle schaltbar ist.

5. Getriebeölkreislauf gemäß einem der Ansprüche 1 bis 4, **dadurch gekennzeichnet, dass** ein hydrodynamischer Wandler (20) vorgesehen ist, der mit durch die Ölpumpe (1) gefördertem Öl oder einem anderen Medium in einem separaten Kreislauf als Arbeitsmedium versorgt wird, wenigstens eine Steuereinrichtung vorgesehen ist, welche eingerichtet ist, um den hydrodynamischen Wandler ein- und auszuschalten sowie den Wärmetauscher (3) und insbesondere den Retarderwärmetauscher (8) wechselseitig zu schalten, und die wenigstens eine Steuereinrichtung eine Steuerlogik aufweist, die den Wärmetauscher (3) und insbesondere den Retarderwärmetauscher (8), letzteren insbesondere parallel zum Wärmetauscher (3) mit Öl durchströmt, immer dann in die erste Position schaltet, wenn der hydrodynamische Wandler (20) eingeschaltet ist, und in die zweite Position schaltet, wenn der hydrodynamische Wandler (20) ausgeschaltet und insbesondere der Retarder (6) nicht eingeschaltet ist.

6. Verfahren zum Steuern des Ölflusses in einem Getriebeölkreislauf gemäß einem der Ansprüche 1 bis 5, mit den folgenden Schritten:
6.1 Fördern des Öls aus dem Ölsumpf (2) mittels der Ölpumpe (1);
6.2 Stauen des geförderten Öls mittels des Arbeitsdruckventils (4), um das Öl auf einen vorgegebenen Arbeitsdruck zu bringen;
6.3 Kühlen des Öls mittels des Wärmetauschers (3);
**dadurch gekennzeichnet, dass**
6.4 der Wärmetauscher (3) in einem ersten Betriebszustand in eine erste Position vor dem Arbeitsdruckventil (4) geschaltet wird und das durch die Ölpumpe (1) geförderte Öl erst durch den Wärmetauscher (3) und anschließend durch das Arbeitsdruckventil (4) geleitet wird, und in einem zweiten Betriebszustand in eine zweite Position hinter dem Arbeitsdruckventil (4) geschaltet wird und das durch die Ölpumpe (1) geförderten Öl erst durch das Arbeitsdruckventil (4) und anschließend durch den Wärmetauscher (3) geleitet wird, oder
6.5 der Wärmetauscher (3) in einem ersten Betriebszustand in eine erste Position vor den Schaltventilen (5), sonstigen Getriebekomponenten und/oder den anderen Aggregaten außerhalb des Getriebes oder bei Anordnung in der oder hinter der abgezweigten Versorgungsleitung (13) vor der Abzweigstelle geschaltet wird und das durch die Ölpumpe (1) geförderte Öl erst durch den Wärmetauscher (3) und anschließend durch die Schaltventile (5), sonstigen Getriebekomponenten und/oder anderen Aggregate geleitet wird, und in einem zweiten Betriebszustand in eine zweite Position hinter den Schaltventilen (5), sonstigen Getriebekomponenten und/oder anderen Aggregaten oder hinter der Abzweigstelle geschaltet wird und das durch die Ölpumpe (1) geförderte Öl erst durch die Schaltventile (5), sonstigen Getriebekomponenten und/oder anderen Aggregate oder die Abzweigstelle und anschließend durch den Wärmetauscher (3) geleitet wird.

7. Verfahren gemäß Anspruch 6, **dadurch gekennzeichnet, dass** der erste Betriebszustand durch Zuschalten eines hydrodynamischen Retarders (6) und/oder eines hydrodynamischen Wandlers (20), der mit dem Öl als Arbeitsmedium betrieben oder dessen Arbeitsmedium durch das Öl gekühlt wird, eingestellt wird, und der zweite Betriebszustand durch Ausschalten des hydrodynamischen Wandlers (20) und, wenn vorgesehen, durch Ausschalten des hydrodynamischen Retarders (6) eingestellt wird.

8. Verfahren gemäß Anspruch 7, **dadurch gekennzeichnet, dass** immer dann, wenn der hydrodynamische Wandler (20) eingeschaltet wird und der hydrodynamische Retarder (6) ausgeschaltet ist, das Öl aus der Ölpumpe (1) parallel durch den Wärmetauscher (3) und den Retarderwärmetauscher (8) zum Ableiten von Wärme aus dem Öl in beiden Wärmetauschern und anschließend vereint durch das Arbeitsdruckventil (4) geleitet wird.

## Claims

1. A transmission oil circuit
1.1 with an oil pump (1) for feeding oil or another fluid from an oil sump (2) or corresponding fluid sump;
1.2 with a heat exchanger (3), the oil flows through, for evacuating the heat from the oil;
1.3 with a work pressure valve (4), against which the oil pump (1) conveys the oil, so as to bring the conveyed oil to a preset work pressure for pressure actuation, applying hydraulic pressure or conveying hydraulic pressure to switching valves (5) and/or other transmission components and/or other units outside the transmission, which are arranged in the flow direction upstream of the work pressure valve (4) in a row with respect thereto, in a supply line or in the flow direction behind a supply line (13), which branches off in the transmission oil circuit upstream of the work pressure valve (4);
**characterised in that**
1.4 the heat exchanger (3) can be switched alternately in a first position upstream of the work pressure valve (4) or in a second position downstream of the work pressure valve (4) as regards the circulation sequence of the oil coming out of the oil pump (1), or
1.5 the heat exchanger (3) can be switched, as regards the circulation sequence of the oil coming out of the oil pump (1), alternately in a first position upstream of the work pressure valve (5) or in a second position downstream of the work pressure valve (4), and/or other transmission components and/or other units or when arranged in or downstream of the branched off supply line (13) in a first position upstream of the branch-off point or a second position downstream of the branch-off position.

2. A transmission oil circuit according to claim 1, **characterised in that** a hydrodynamic retarder (6) is provided, which is supplied with the oil conveyed through the oil pump (1) or another fluid in a separate circuit as a working fluid, and at least one control device is provided, which is designed to switch the retarder (6) on and off as well as to switch alternately the heat exchanger (3), and the at least one control device includes a control logic, which always switches the heat exchanger (3) into the first position, when the retarder (6) is switched on, and - possibly while taking into account additional heat input - then switches into the second position, when the retarder (6) is switched off.

3. A transmission oil circuit according to claim 2, **characterised in that** a retarder heat exchanger (8) the oil flows through is provided, in order to evacuate the heat from the working fluid of the retarder (6), and the heat exchanger (3) can be switched as regards the sequence of circulation with the oil coming out of the oil pump (1) alternately parallel or in a row relative to the retarder heat exchanger (8), the latter in particular in a row upstream of the retarder heat exchanger (8).

4. A transmission oil circuit according to claim 3, **characterised in that** also the retarder heat exchanger (8) can be switched alternately in a first position upstream of the work pressure valve (4) or in a second position downstream of the work pressure valve (4) as regards the circulation sequence of the oil coming out of the oil pump (1), and/or alternately in a first position upstream of the switching valves (5) or a second position downstream of the switching valves (5), and/or other transmission components and/or other units or when arranged in or downstream of the branched off supply line (13) in a first position upstream of the branch-off point or a second position downstream of the branch-off position.

5. A transmission oil circuit according to one of claims 1 to 4, **characterised in that** a hydrodynamic converter (20) is provided, which is supplied with the oil conveyed through the oil pump (1) or another fluid in a separate circuit as a working fluid, at least one control device is provided, which is designed, in order to switch the hydrodynamic converter on and off as well as to switch alternately the heat exchanger (3) and in particular the retarder heat exchanger (8), and the at least one control device includes a control logic, which directs oil through the heat exchanger (3) and in particular the retarder heat exchanger (8) the latter in particular parallel to the heat exchanger (3), then always switches into the first position, when the hydrodynamic converter (20) is switched on and switches into the second position, when the hydrodynamic converter (20) is switched off and in particular when the retarder (6) is not switched on.

6. A method for controlling the oil flow in a transmission oil circuit according to one of the claims 1 to 5, with the following steps:
6.1 conveying the oil from the oil sump (2) by means of the oil pump (1);
6.2 accumulation of the conveyed oil by means of the work pressure valve (4), in order to bring the oil to a preset work pressure;
6.3 cooling the oil by means of the heat exchanger (3);
**characterised in that**
6.4. the heat exchanger (3) in a first operating mode is switched into a first position upstream of the work pressure valve (4) and the oil fed through the oil pump (1) is conveyed first through the heat exchanger (3) and then through the work pressure valve (4), and in a second operating mode is switched into a second position downstream of the work pressure valve (4) and the oil fed through the oil pump (1) is conveyed first through the work pressure valve (4) and then through the heat exchanger (3), or
6.5 the heat exchanger (3) in a first operating mode is switched into a first position upstream of the switching valves (5), other transmission components and/or other units outside the transmission or in an arrangement inside or downstream of the branched off supply line (13) and the oil fed through the oil pump (1) is conveyed first through the heat exchanger (3) and then through the switching valves (5), other transmission components and/or other units, and in a second operating mode is switched into a second position downstream of the switching valves (5), other transmission components and/or other and the oil fed through the oil pump (1) is conveyed first through the switching valves (5), other transmission components and/or other units or the branch-off point and then through the heat exchanger (3).

7. A method according to claim 6, **characterised in that** the first operating mode is set by switching on a hydrodynamic retarder (6) and/or a hydrodynamic converter (20), which is driven by the oil acting as a working fluid or whose working fluid is cooled by the oil, and the second operating mode is set by switching off the hydrodynamic converter (20) and, if provided, by switching off the hydrodynamic retarder (6).

8. A method according to claim 7, **characterised in that** systematically when the hydrodynamic converter (20) is switched on and the hydrodynamic retarder (6) is switched off, the oil is conveyed out of the oil pump (1) in parallel through the heat exchanger (3) and the retarder heat exchanger (8) for evacuating the heat from the oil in both heat exchangers and then combined through the work pressure valve (4).

## Revendications

1. Circuit d'huile de transmission
1.1 pourvu d'une pompe à huile (1) pour acheminer de l'huile ou autre fluide à partir d'un carter à huile (2) ou carter de fluide correspondant;
1.2 d'un échangeur thermique (3), qui est traversé par l'huile, pour extraire la chaleur de l'huile;
1.3 d'une vanne de pression de travail (4), vers laquelle la pompe à huile achemine l'huile, pour porter l'huile acheminée à une pression de travail prédéterminée afin d'assurer la commande à pression, la mise sous pression de l'huile ou l'alimentation de l'huile de vannes de commutation (5) et/ou autres composants de la transmission et/ou autres groupes à l'extérieur de la transmission, qui sont disposés dans le sens d'écoulement en amont de la vanne de pression de travail (4), en série par rapport à celle-ci ou dans une conduite d'alimentation ou encore dans le sens d'écoulement en aval d'une conduite d'alimentation (13), qui bifurque dans le circuit d'huile de transmission en amont de la vanne de pression de travail (4);
**caractérisé en ce que**
1.4 l'échangeur thermique (3) peut être disposé alternativement dans une première position en amont ou une seconde position en aval de la vanne de pression de travail (4) en termes d'ordre de traversée de l'huile provenant de la pompe à huile (1) ou bien
1.5 l'échangeur thermique (3) peut être disposé alternativement dans une première position en amont ou une seconde position en aval des vannes de commutation (5), autres composants de la transmission et/ou autres groupes en termes d'ordre de traversée de l'huile provenant de la pompe à huile (1), ou bien dans une première position en amont ou une seconde position en aval du point de bifurcation dans le cas d'un agencement dans ou en aval de la conduite d'alimentation en dérivation (13).

2. Circuit d'huile de transmission selon la revendication 1, **caractérisé en ce qu'**un retardateur hydrodynamique (6) est prévu, qui est alimenté en huile acheminée par la pompe à huile (1) ou un autre fluide dans un circuit séparé comme fluide de travail, et au moins un dispositif de commande est prévu, qui est agencé pour allumer ou éteindre le retardateur (6) et solliciter l'échangeur thermique (3) alternativement, et ledit au moins un dispositif de commande présente une logique de commande, qui commute toujours l'échangeur thermique (3) dans la première position lorsque le retardateur (6) est en marche et (le cas échéant en tenant compte de tout apport thermique supplémentaire) le commute dans la seconde position lorsque le retardateur (6) est éteint.

3. Circuit d'huile de transmission selon la revendication 2, **caractérisé en ce qu'**un échangeur thermique à retardateur (6) est traversé d'huile pour extraire la chaleur provenant du fluide de travail du retardateur (6), et l'échangeur thermique (3) peut être disposé alternativement en parallèle ou en série par rapport à l'échangeur thermique à retardateur (8) en termes d'ordre de traversée d'huile, ce dernier en particulier en série en amont de l'échangeur thermique à retardateur (8).

4. Circuit d'huile de transmission selon la revendication 3, **caractérisé en ce qu'**aussi l'échangeur thermique à retardateur (8) peut être disposé alternativement dans une première position en amont ou une seconde position en aval de la vanne de pression de travail (4) en termes d'ordre de traversée de l'huile provenant de la pompe à huile (1) ou bien alternativement dans une première position en amont ou une seconde position en aval des vannes de commutation (5), autres composants de la transmission et/ou autres groupes ou bien dans une première position en amont ou une seconde position en aval du point de bifurcation dans le cas d'un agencement dans ou en aval de la conduite d'alimentation en dérivation (13).

5. Circuit d'huile de transmission selon l'une des revendications 1 à 4, **caractérisé en ce qu'**un convertisseur hydrodynamique (20) est prévu, qui est alimenté en huile acheminée par la pompe à huile (1) ou un autre fluide dans un circuit séparé comme fluide de travail, au moins un dispositif de commande est prévu, qui est agencé pour allumer ou éteindre le convertisseur hydrodynamique et solliciter l'échangeur thermique (3) et en particulier l'échangeur thermique à retardateur (8) alternativement, et ledit au moins un dispositif de commande présente une logique de commande, et sature d'huile l'échangeur thermique (3) et en particulier l'échangeur thermique à retardateur (8), ce dernier en particulier parallèlement à l'échangeur thermique, le commute toujours dans la première position, lorsque le convertisseur hydrodynamique (20) est en marche et le commute dans la seconde position lorsque le convertisseur hydrodynamique (20) est éteint et en particulier lorsque le retardateur (6) n'est pas en marche.

6. Procédé de commande du flux d'huile dans un circuit d'huile de transmission selon l'une des revendications 1 à 5, comprenant les étapes suivantes :
6.1 Acheminement de l'huile à partir du carter à huile (2) à l'aide de la pompe à huile (1):
6.2 Accumulation de l'huile acheminée à l'aide de la vanne de pression de travail (4), pour porter l'huile à une pression de travail prédéterminée;
6.3 Refroidissement de l'huile à l'aide de l'échangeur thermique (3); **caractérisé en ce que**
6.4 l'échangeur thermique (3) dans un premier mode d'exploitation est commuté pour adopter une première position en amont de la vanne de pression de travail (4) et l'huile acheminée (1) par la pompe à huile est guidée d'abord à travers l'échangeur thermique (3) puis à travers la vanne de pression de travail (4), et dans un second mode d'exploitation commuté pour adopter une seconde position en aval de la vanne de pression de travail (4) et l'huile acheminée (1) par la pompe à huile est guidée d'abord à travers l'échangeur thermique (4) puis à travers la vanne de pression de travail (3), ou bien
6.5 l'échangeur thermique (3) dans un premier mode d'exploitation est commuté dans une première position en amont des vannes de commutation (5), autres composants de la transmission et/ou des autres groupes à l'extérieur de la transmission ou dans un agencement dans ou en aval de la conduite d'alimentation en dérivation (13) en amont du point de bifurcation et l'huile acheminée (1) par la pompe à huile est guidée d'abord à travers l'échangeur thermique (3) puis à travers les vannes de commande (5), autres composants de la transmission et/ou autres groupes, et dans un second mode d'exploitation est commuté dans une seconde position en amont des vannes de commutation (5), autres composants de la transmission et/ou des autres groupes ou bien en aval du point de bifurcation et l'huile acheminée (1) par la pompe à huile est guidée d'abord à travers les vannes de commande (5), autres composants de la transmission et/ou autres groupes ou bien le point de bifurcation puis à travers l'échangeur thermique (3).

7. Procédé selon la revendication 6, **caractérisé en ce que** l'on règle le premier mode d'exploitation en activant un retardateur hydrodynamique (6) et/ou un convertisseur hydrodynamique (20), que l'on utilise avec de l'huile comme fluide de travail ou bien dont on refroidit le fluide de travail grâce à l'huile, et l'on règle le second mode d'exploitation en éteignant du convertisseur hydrodynamique (20), le cas échéant, en éteignant le retardateur hydrodynamique (6).

8. Procédé selon la revendication 7, caractérisé en ce lorsque l'on met en marche le convertisseur hydrodynamique (20) et que le retardateur (6) est éteint, l'huile est évacuée de la pompe à huile (1) en parallèle à travers l'échangeur thermique (3) et l'échangeur thermique à retardateur (8) pour extraire la chaleur de l'huile dans les deux échangeurs thermiques avant regroupement à travers la vanne de pression de travail (4).
